# EUROPÄISCHE PATENTSCHRIFT

(11) **EP 0 601 022 B1**
(45) Veröffentlichungstag und Bekanntmachung des Hinweises auf die Patenterteilung: **25.10.1995**
(21) Anmeldenummer: 92918398.6
(22) Anmeldetag: 27.08.1992
(51) Int. Cl.: B60G 15/06

(54) **FEDERBEINLAGER**
BEARING FOR SUSPENSION STRUT
ROULEMENT POUR JAMBE DE SUSPENSION

(30) Priorität: 05.09.1991 DE 4129513
(43) Veröffentlichungstag der Anmeldung: 15.06.1994
(73) Patentinhaber: INA Wälzlager Schaeffler KG, 91074 Herzogenaurach (DE)
(72) Erfinder: ZERNICKEL, Alexander, D-8522 Herzogenaurach (DE); DÖPPLING, Horst, D-8522 Herzogenaurach (DE); SCHOLIAN, Horst, D-8521 Aurachtal (DE)
(86) Internationale Anmeldenummer: EP9201979
(87) Internationale Veröffentlichungsnummer: WO9304882

(56) Entgegenhaltungen:
- EP-A- 0 342 725
- EP-A- 0 390 331
- DE-A- 2 820 585
- DE-A- 3 619 942
- DE-U- 7 208 788
- FR-A- 2 225 647
- US-A- 3 051 469

## Beschreibung

Die Erfindung betrifft ein Federbeinlager für die Radaufhängung von Kraftfahrzeugen mit einem inneren und einem äußeren Lagerring der über Mittel an einem benachbarten Karosserieteil befestigbar ist, wobei der innere Lagerring einen konzentrisch in seiner Bohrung befindlichen Toleranzring radial umfaßt, mit einem aus tiefgezogenen Blech bestehenden Lagergehäuse, welches den äußeren Lagerring umschließt und mit einem im wesentlichen quer zu einer Lagerachse verlaufenden Flansch, welcher einstückig mit dem Lagergehäuse ausgebildet ist.

So geht aus der gattungsbildenden DE-A 28 20 585 ein Federbeinlager hervor, dessen Gehäuse einteilig und dünnwandig ausgebildet ist. Der äußere Lagerring ist bei dem als gattungsbildend angesehenen Dokument in Umfangsrichtung von einem hülsenartigen Abschnitt des Gehäuses umfaßt. Dieser Abschnitt geht in Axialrichtung in einen sich radial erstreckenden Flansch zur Befestigung des vorbekannten Federbeinlagers an einem benachbarten Karosserieteil über. Von Nachteil bei dem aufgezeigten Lager ist es, daß erhebliche Blechdicken erforderlich sind, um eine lagesichere Befestigung des obengenannten Lagers an dem benachbarten Karosserieteil zu erzielen. Die in diesem Karosseriebereich üblichen Blechdicken von 5 mm sind nicht oder nur mit stark erhöhtem Aufwand mit der erforderlichen Genauigkeit tiefziehfähig. Es ist damit zu rechnen, daß sich das Gehäuse bei Krafteinleitung unerwünscht verformt. Des weiteren sind der älteren Druckschrift keine Maßnahmen entnehmbar, den äußeren Lagerring ausreichend fest mit dem hülsenartigen Flansch des Gehäuses zu verbinden, insbesondere ihn in Axialrichtung zu fixieren. Zudem sind dieser Druckschrift keine Maßnahmen einer ausreichenden Abdichtung des aufgezeigten Lagers entnehmbar.

Andere Lösungen zeigen einen zweigeteilten Flansch, so auch mit aufwendigen Verstärkungseinlagen oder geschweißte Ausführungen mit den bekannten Nachteilen oder auch Ausführungen mit einer relativ massiven Ausbildung des hülsenartigen Abschnittes (DE-A 39 42 652).

Der Erfindung liegt daher die Aufgabe zugrunde, ein Federbeinlager der eingangs beschriebenen Art zu schaffen, bei dem die aufgezeigten Nachteile beseitigt sind und das insbesondere über eine einfach zu fertigende Verbindungsmöglichkeit zu einem benachbarten Karosserieteil verfügt, die gleichzeitig hohen Festigkeits- und Genauigkeitsanforderungen genügt.

Erfindungsgemäß wird diese Aufgabe nach dem kennzeichnenden Teil des Anspruchs 1 dadurch gelöst, daß das Lagergehäuse wenigstens in einem Bereich seiner an dem äußeren Lagerring anliegenden Innenfläche eine Umbördelung um 180° aufweist, die zumindest an der gesamten Außenfläche oder an der Stirnfläche des äußeren Lagerringes verläuft, daß eine axiale Lagefixierung des äußeren Lagerringes durch eine Ringverstemmung der Innenfläche des Lagergehäuses hergestellt ist und daß der Flansch sich unmittelbar an die Umbördelung anschließt. Dieser Flansch weist dabei eine tiefziehfähige Blechstärke auf und kann durch Sicken versteift sein. Durch diese gewählte Blechstärke gelingt es, den Flansch und das Lagergehäuse einstückig, aus einem Blechteil bestehend, auszubilden. Die bisherige Schweißverbindung mit ihren nachteiligen Gefügeveränderungen in den Randzonen der Schweißverbindung fällt weg. Die Masse des gesamten Federbeinlagers ist durch die erfindungsgemäße Ausführung verringert.

Vorteilhafte Weiterbildungen der Erfindung sind Gegenstand der Unteransprüche 2 bis 4 und sollen im folgenden näher beschrieben werden.

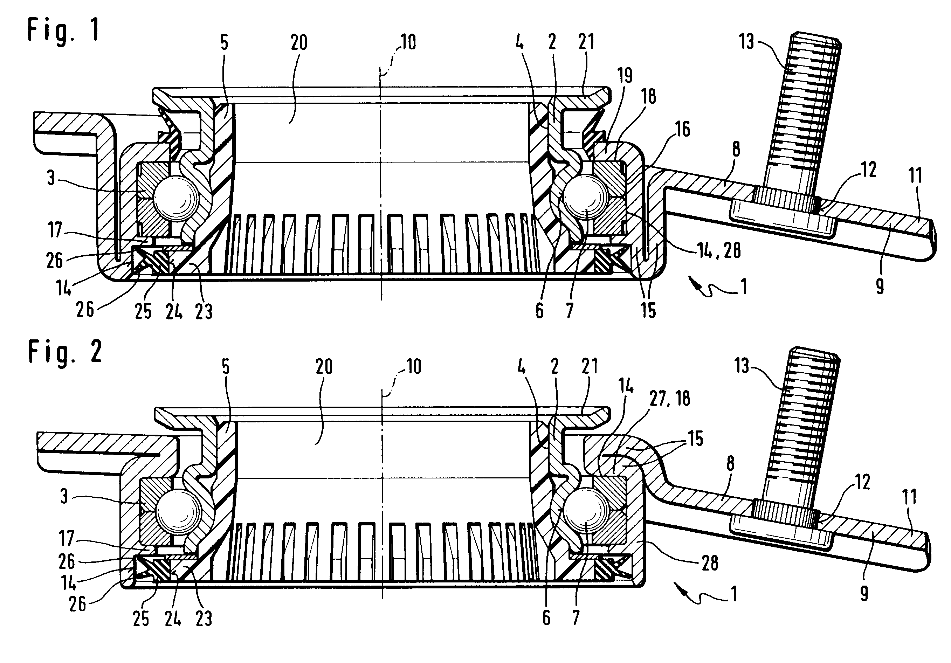

Aus Anspruch 2 geht es hervor, daß das Lagergehäuse, ausgehend von seinem den äußeren Lagerring radial umgebenden zylindrischen Abschnitt, radial nach innen abgewinkelt und anschließend zur Bildung des Flansches radial nach außen umgebördelt ist (Figur 2). Die hier und in Anspruch 1 beschriebenen Umbördelungen dienen einerseits einer lagegenauen Fixierung des äußeren Lagerringes im Federbeinlager, andererseits einer Versteifung der gesamten Ausbildung.

In Weiterbildung der Erfindung geht es aus Anspruch 3 hervor, daß ein innerer Lagerring für das Federbeinlager aus tiefziehfähigem Material, insbesondere Stahlblech vorgesehen ist, wobei dieser mit einer aus der Bohrung des Federbeinlagers axial herausragenden und radial sich erstreckenden Endfläche gleichzeitig eine Auflage und einen Anschlag für ein sich durch die Bohrung des Federbeinlagers erstreckendes Dämpfungselement bildet. Durch diese ebenfalls einteilige Blechausfuhrung entfallen die beim Stand der Technik überwiegend angewendeten mehrteiligen und konstruktiv aufwendigen Ausbildungen. Somit ist die Masse des erfindungsgemäßen Federbeinlagers weiter gesenkt und dessen Fertigungskosten sind minimiert.

Der in Anspruch 4 beschriebene Toleranzring dient einer paßgenauen Aufnahme des in seiner Bohrung befindlichen Dämpfungselementes und ist vorteilhaft aus einem Kunststoff, insbesondere glasfaserverstärktem Polyamid, gefertigt, wobei auch andere Materialien, wie biegeweiche und/oder Leichtbauwerkstoffe eingebaut werden können. Der an einem Bund des Toleranzringes anliegende Radialdichtring kann hier aus Polyurethan bestehen.

Zwei Ausführungsbeispiele der Erfindung sind in der Zeichnung dargestellt und werden im folgenden näher beschrieben. Es zeigen:
- Fig. 1: einen Axialschnitt eines Federbeinlagers mit einer Umbördelung des Lagergehäuses im Bereich der radialen Außenfläche des Außenringes und
- Fig. 2: einen Axialschnitt nach Figur 1 mit einer Umbördelung im Bereich einer axialen Außenfläche.

**Figur 1** zeigt ein erfindungsgemäßes Federbeinlager 1. Dieses Federbeinlager 1 besteht aus einem inneren und einem äußeren Lagerring 2, 3. Der äußere Lagerring 3 ist zweigeteilt. Der innere Lagerring 2 umschließt einen konzentrisch in seiner Bohrung 4 befindlichen Toleranzring 5 und ist aus Stahlblech gebildet, wobei seine Laufbahn 6 für die Kugeln 7 rolliert ist. Ein Lagergehäuse 8 aus tiefziehfähigem Material umschließt den äußeren Lagerring 3. Gleichzeitig bildet das Lagergehäuse 8 einen Flansch 9, der im wesentlichen quer zu einer Lagerachse 10 verläuft. Im radialen, von der Lagerachse 10 wegweisenden Außenbereich 11 des Flansches 9 ist wenigstens eine Bohrung 12 für eine Schraube 13 zur Befestigung des Federbeinlagers 1 an einem benachbarten Karosserieteil vorgesehen.

Das Lagergehäuse 8 ist an seiner an dem äußeren Lagerring 3 anliegenden Innenfläche 14 durch eine Umbördelung 15, die hier 180° beträgt, verstärkt. Diese Umbördelung 15 erstreckt sich im wesentlichen über die radiale Außenfläche 16 des äußeren Lagerringes 3.

Der äußere Lagerring 3 erhält durch eine Verstemmung 17 der Innenfläche 14 des Lagergehäuses 8 eine axiale Fixierung und liegt mit seiner anderen, von der Verstemmung 17 abgewandten, Stirnfläche 18 an einem radial nach innen abgewinkelten Endbereich 19 der Innenfläche 14 des Lagergehäuses 8 an. Der Lagerring 3 kann dabei durch Verprägen aus einem geschweißten Rohling gefertigt sein. Die Verstemmung 17 ist vorteilhaft als Ringverstemmung in axialer Richtung in das Lagergehäuse 8 eingebracht. Der innere Lagerring 2 für das Federbeinlager 1 ragt axial aus der Bohrung 20 des Federbeinlagers 1 heraus und bildet mit seiner herausgeführten Endfläche 21 eine Auflage und einen Anschlag für ein sich durch die Bohrung 20 des Federbeinlagers 1 erstreckendes Dämpfungselement. Dieses soll hier nicht näher erläutert werden, da es hinreichend bekannt ist.

In die Bohrung 4 des inneren Lagerringes 2 ist der Toleranzring 5 aus Kunststoff eingebaut. Dieser Toleranzring 5 verfügt über einen radialen Bund 23. An der Außenfläche 24 des Bundes 23 ist ein Radialdichtring 25 befestigt, wobei der Radialdichtring 25 vorzugsweise zwei Dichtlippen 26 aufweist. Diese Dichtlippen 26 liegen an einem Teil der Innenfläche 14 des Lagergehäuses 8 an, und dichten das Federbeinlager 1 auf Lebenszeit vor austretendem Schmiermittel.

**Figur 2** zeigt eine weitere Gestaltungsvariante der Umbördelung 15 des Lagergehäuses 1. Hierbei bildet diese Umbördelung 15 eine axiale Anlagefläche 27 für den äußeren Lagerring 3. Auch bei dieser Lösung ist eine Verstemmung 17 der Innenfläche 14 des Lagergehäuses 8 vorgesehen.

### Bezugszahlenliste

- 1: Federbeinlager
- 2: innerer Lagerring
- 3: äußerer Lagerring
- 4: Bohrung
- 5: Toleranzring
- 6: Laufbahn
- 7: Kugeln
- 8: Lagergehäuse
- 9: Flansch
- 10: Lagerachse
- 11: Außenbereich
- 12: Bohrung
- 13: Schraube
- 14: Innenfläche
- 15: Umbördelung
- 16: Außenfläche
- 17: Verstemmung
- 18: Stirnfläche
- 19: Endbereich
- 20: Bohrung
- 21: Endfläche
- 23: Bund
- 24: Außenfläche
- 25: Radialdichtring
- 26: Dichtlippen
- 27: Anlagefläche
- 28: zylindrischer Abschnitt

## Patentansprüche

1. Federbeinlager (1) für die Radaufhängung von Kraftfahrzeugen, mit einem inneren und einem äußeren Lagerring (2, 3) der über Mittel (12, 13) an einem benachbarten Karosserieteil befestigbar ist, wobei der innere Lagerring (2) einen konzentrisch in seiner Bohrung (4) befindlichen Toleranzring (5) radial umfaßt, mit einem aus tiefgezogenen Blech bestehenden Lagergehäuse (8), welches den äußeren Lagerring (3) umschließt und mit einem im wesentlichen quer zu einer Lagerachse (10) verlaufenden Flansch (9), welcher einstückig mit dem Lagergehäuse (8) ausgebildet ist, **dadurch gekennzeichnet,** daß das Lagergehäuse (8) wenigstens in einem Bereich seiner an dem äußeren Lagerring (3) anliegenden Innenfläche (14) eine Umbördelung (15) um 180° aufweist, die zumindest an der gesamten Außenfläche (16) oder an der Stirnfläche (18) des äußeren Lagerringes (3) verläuft, daß eine axiale Lagefixierung des äußeren Lagerringes (3) durch eine Ringverstemmung (17) der Innenfläche (14) des Lagergehäuses (8) hergestellt ist und daß der Flansch (9) sich unmittelbar an die Umbördelung (15) anschließt.

2. Federbeinlager nach Anspruch 1, **dadurch gekennzeichnet,** daß das Lagergehäuse (8), ausgehend von seinem den äußeren Lagerring (3) radial umgebenden zylindrischen Abschnitt (28), radial nach innen abgewinkelt und anschließend zur Bildung des Flansches (9) radial nach außen umgebördelt ist (Figur 2).

3. Federbeinlager nach Anspruch 1, **dadurch gekennzeichnet,** daß ein innerer Lagerring (2) für das Federbeinlager (1) aus tiefziehfähigem Material, insbesondere Stahlblech, vorgesehen ist, wobei dieser mit einer aus der Bohrung (20) des Federbeinlagers (1) axial herausragenden und radial sich erstreckenden Endfläche (21) gleichzeitig eine Auflage und einen Anschlag für ein sich durch die Bohrung (20) des Federbeinlagers (1) erstreckendes Dämpfungselement bildet.

4. Federbeinlager nach Anspruch 1, mit einem Toleranzring (5), **dadurch gekennzeichnet,** daß der Toleranzring (5) einen radialen, zur Aufnahme des Radialdichtringes (25) dienenden Bund aufweist, wobei der Radialdichtring (25) mit vorzugsweise zwei Dichtlippen (26) an der Innenfläche (14) des Lagergehäuses (8) anliegt.

## Claims

1. Suspension strut bearing (1) for the suspension of wheels of automotive vehicles comprising an inner bearing ring (2) and an outer bearing ring (3) which can be secured by means (12, 13) to a neighbouring part of a vehicle body, the inner bearing ring (2) radially surrounding a tolerance ring (5) situated concentrically in its bore (4), the said bearing further comprising a bearing housing (8) of deep drawn sheet metal which surrounds the outer bearing ring (3), and a flange (9) which extends essentially crosswise to a bearing axis (10) and is made in one piece with the bearing housing (8), characterized in that the bearing housing (8) comprises, in at least one region of its inner surface (14) which bears against the outer bearing ring (3), an edge (15) turned over through 180° which extends at least over the entire outer surface (16) or over the end face (18) of the outer bearing ring (3), an axial positional fixing of the outer bearing ring (3) is assured by an annular swaging (17) of the inner surface (14) of the bearing housing (8), and the turned-over edge (15) merges directly into the flange (9).

2. Suspension strut bearing according to claim 1, characterized in that, starting from its cylindrical portion (28) which radially surrounds the outer bearing ring (3), the bearing housing (8) is bent radially inwards at an angle and then turned over radially outwards to form the flange (9) (Fig. 2).

3. Suspension strut bearing according to claim 1, characterized in that an inner bearing ring (2) for the suspension strut bearing (1) is made of a deep drawable material, in particular of steel sheet, and a radially extending end surface (21) of the inner bearing ring (2) projecting axially out of the bore (20) of the suspension strut bearing (1) forms a support and, at the same time, a stop for a damping element extending through the bore (20) of the suspension strut bearing (1).

4. Suspension strut bearing according to claim 1 with a tolerance ring (5), characterized in that the tolerance ring (5) comprises a radial collar serving to receive a radial sealing ring (25) which bears preferably by two sealing lips (26) against the inner surface (14) of the bearing housing (8).

## Revendications

1. Palier (1) de jambe de suspension pour la suspension de roues de véhicules automobiles comprenant une bague interne (2) et une bague externe (3) de palier qui est adaptée à être fixée par des moyens (12, 13) sur une partie de carrosserie voisine, la bague interne (2) de palier entourant radialement une bague intermédiaire (5) agencée concentriquement dans son alésage (4), et ledit palier comprend, en plus, un boîtier (8) de palier en tôle emboutie qui entoure la bague externe (3) de palier, ainsi qu'une bride (9) qui s'étend sensiblement en travers d'une axe (10) de palier en étant réalisée en une seule pièce avec le boîtier (8) de palier, caractérisé en ce que le boîtier (8) de palier comprend, au moins dans une région de sa surface interne (14) qui s'appuie contre la bague externe (3) de palier, un rabattement (15) de 180° qui s'étend au moins sur la surface externe entière (16) de la bague externe (3) de palier ou sur la face frontale (18) de celle-ci, en ce qu'une fixation axiale de la position de la bague externe (3) de palier est réalisée à l'aide d'un matage annulaire (17) de la surface interne (14) du boîtier (8) de palier, et en ce que la bride (9) se raccorde directement au rabattement (15).

2. Palier de jambe de suspension selon la revendication 1, caractérisé en ce que, à partir de sa partie cylindrique (28) qui entoure radialement la bague externe (3) de palier, le boîtier (8) de palier est replié angulairement vers l'intérieur en direction radiale et est ensuite rabattu radialement vers l''extérieur pour former la bride (9) (figure 2).

3. Palier de jambe de suspension selon la revendication 1, caractérisé en ce qu'une bague interne (2) de palier pour le palier (1) de jambe de suspension est réalisée en un matériau emboutissable, en particulier, en tôle d'acier, et une surface d'extrémité (21) de cette bague qui fait axialement saillie de l'alésage (20) du palier (1) de jambe de suspension et qui s'étend en direction radiale, forme un appui et en même temps une butée pour un élément d'amortissement qui s'étend au travers de l'alésage (20) du palier (1) de jambe de suspension.

4. Palier de jambe de suspension selon la revendication 1 ayant une bague intermédiaire (5), caractérisé en ce que la bague intermédiaire (5) comprend un collet radial qui sert à loger l'anneau radial d'étanchéité (25) qui s'appuie, de préférence, par deux lèvres d'étanchéité (26) contre la surface interne (14) du boîtier (8) de palier.
